# EUROPEAN PATENT SPECIFICATION

(11) **EP 0 547 641 B1**
(45) Date of publication and mention of the grant of the patent: **13.09.1995**
(21) Application number: 92201726.4
(22) Date of filing: 11.06.1992
(51) Int. Cl.: F24H 1/32, F24H 9/18

(54) **Burner which may or may not be integrated into a heat exchanger**
Brenner, gegebenenfalls integriert in einem Wärmetauscher
Bruleur éventuellement intégré dans un échangeur de chaleur

(30) Priority: 16.12.1991 NL 9102096; 14.02.1992 NL 9200282
(43) Date of publication of application: 23.06.1993
(73) Proprietor: DEJATECH B.V., NL-5935 BG Steyl (NL)
(72) Inventor: Deckers, Jan Hubertus, NL-5935 BG Steyl (NL)
(74) Representative: Smulders, Theodorus A.H.J., Ir.

(56) References cited:
- EP-A- 0 276 408
- EP-A- 0 281 125
- EP-A- 0 404 260

## Description

This invention relates to a heating apparatus, such as a central-heating boiler, which comprises a burner and a light-metal cast heat exchanger bounding the combustion chamber and comprising water ducts and heating-surface enlarging protrusions on the flue gas side.

In known boilers of this type, the burner is a premix burner (i.e. a burner with premix of air and fuel) in principle designed as a separate element and the burner block, where the combustible gas/air mixture egresses and behind which a flame is maintained, is arranged at the entrance of the combustion chamber. The heat exchanger, within which the combustion chamber is located, absorbs heat of the flue gases via the projections extending into the combustion chamber, and transfers this heat to the water passing through the heat exchanger along a zigzag path, in counterflow relative to the flue gases.

In this gas boiler - and, for that matter, all new generations of gas boilers - it is attempted to limit the NOₓ and CO emission to a minimum. This can be achieved inter alia by a low flame temperature and a short flame.

EP-A-0 404 260 discloses a burner for a heating device in which the burner is provided with straight ducts for the supply of a mixture of gaseous fuel. The burner is made up of a number of plate-type elements which are placed against each other and are connected to each other to form a unit. The elements define ducts through which a cooling medium can flow. The mixture of gaseous fuel and air is fed to the combustion surface through the straight ducts and the ducts for the cooling medium are situated at least partially near the combustion surface of the burner.

The invention provides a heating apparatus, which has a low NOₓ and CO emission in the manner indicated, which is constructionally simple and in which, for those parts that can come into contact with the flame, no costly materials such as ceramic material or metal fiber are required, but in which conventional light metal, such as aluminum alloys, can be sufficient.

To that end, according to the invention, the burner opening of the burner is at least partly bounded by a water duct having protrusions (projections) extending into the burner opening and defining a labyrinth passage for a combustible gas/air mixture in the burner opening.

By dimensioning the labyrinth passage to be so narrow that the mixture is compressed, so that the flame has a short burning length, it can be accomplished that at full load the flame having a length of about 4-5 cm stabilizes slightly beyond the last projections located on the side of a combustion chamber arranged behind the burner.

Then the flame will not transfer more than about 2-3% of the heat to the projections in the burner opening. At partial load (modulation), the flame will come closer to these projections or even recede partly between the projections in the burner opening. The result hereof is that about 15-20% of the heat is transferred to the projections in the burner opening.

To provide for this last situation, in which at partial load a relatively great deal of heat is transferred to the burner block, the burner block in the known burner designs must be made of ceramic, metal fiber or similar costly material, but in the apparatus according to the invention, this is not necessary.

The fact is that by virtue of the design of the burner block with water-cooled light-metal projections which accordingly exhibit good heat-conduction, the heat transferred to the burner block is directly transferred to the water flowing through the water duct extending along the burner opening. Inasmuch as the projections transfer the heat given off to them direct to the water flowing through, the flame temperature is maintained at a relatively low value as well, i.e. lower than the temperature at which NOₓ is produced.

A backplate may be mounted against the free ends of the projections, for instance cast thereon or screwed thereto. The burner opening is further closed off laterally by end walls.

According to the invention, viewed in the through-flow direction of the flue gas, the projections can be arranged in successive series of juxtaposed projections having such profiles and being so arranged relative to projections of an adjacent series that the desired labyrinth passage between the projections is formed.

According to the invention, a burner having an accurately defined labyrinth passage in the burner opening can comprise a casting which comprises a water duct part as well as tapering projections protruding from a wall of the water duct part, these projections being arranged so close to each other and having a conicity so slight that they bound a narrow labyrinth passage of substantially constant width (of 2-2.5 mm).

In order to enable simple manufacture of the burner with exactly definable labyrinth passage in the burner opening, in another embodiment of the invention, the burner is composed of two castings arranged on opposite sides of the longitudinal axis of the combustion chamber, the projections extending into the burner opening interlocking in such a manner that a labyrinth passage of a desired, narrow clearance width (of 2-2.5 mm) is defined.

In a variant embodiment of the invention, the projections in the burner opening can have a frustoconical configuration, each extend over substantially the entire cross-section of the burner opening and have a diameter course of about 10 to about 6 mm, given a burner opening of 30-50 mm.

Alternatively, the projections in the burner opening can have a frustoconical configuration, each extend over the entire cross-section of the burner opening and, given a burner opening of 30-50 mm, have a diameter course of about 7 mm to about 6.7 mm.

In another variant embodiment of the invention, in which the projection pattern comprises at least two adjacent series of juxtaposed projections, according to the invention, one series consists of projections of cylindrical section and the next series consists of projections of drop-shaped section, the narrow sides thereof extending between the cylindrical projections.

In further elaboration of the invention, the burner block can be integrated into a light-metal cast two-part heat exchanger comprising water ducts and heating-surface enlarging projections on the flue gas side, the burner opening being bounded by a part of the heat exchanger.

Separately casting the halves of the heat exchanger, each forming a part of the heat exchanger and a part of the burner block can be effected in a relatively simple and inexpensive manner and a boiler designed with such a burner and heat exchanger assembly requires hardly any maintenance.

With such a design it is possible to limit the NOₓ and CO emission to a minimum, more specifically to 40 and 50 ppm, respectively. It is further possible with this design to realize higher outputs per cm² than in the materials used heretofore, such as ceramic material or metal fiber.

To clarify the invention, some embodiments of the burner and of the assembly of burner and heat exchanger will now be described, with reference to the accompanying drawings, in which:
Fig. 1 is a longitudinal sectional elevation of an integrated assembly of a burner and a heat exchanger;
Fig. 2 is a sectional elevation taken on the line II-II of Fig. 1;
Fig. 3 is a schematic longitudinal sectional elevation of the burner as a separate design;
Fig. 4 is an elevation similar to Fig. 3, of another embodiment;
Fig. 5 is an elevation similar to Fig. 2, of the burner shown in Fig. 4; and
Figs 6 and 7 show yet another variant of the burner, respectively a cross-section through the series of projections and a side elevation.

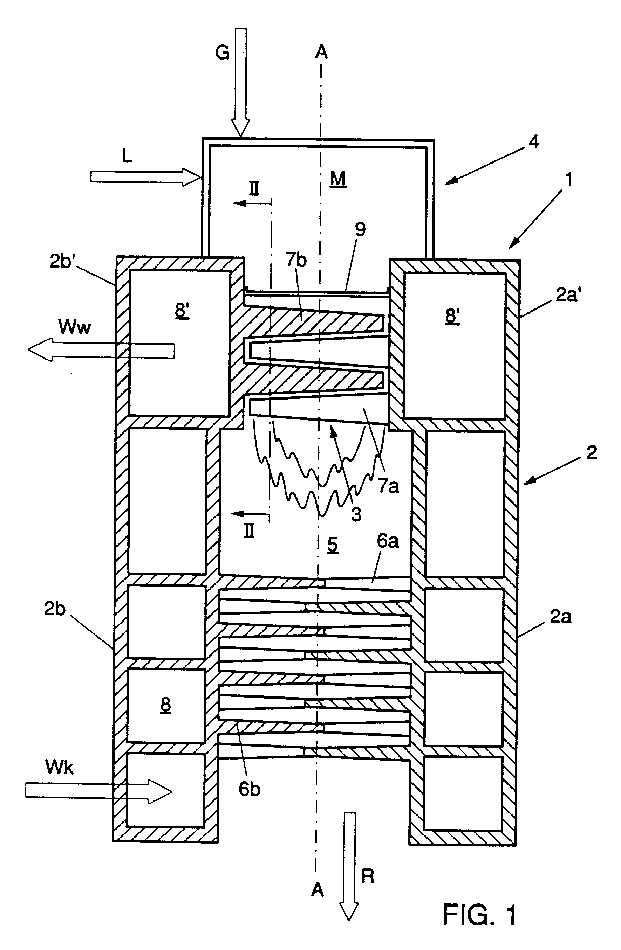

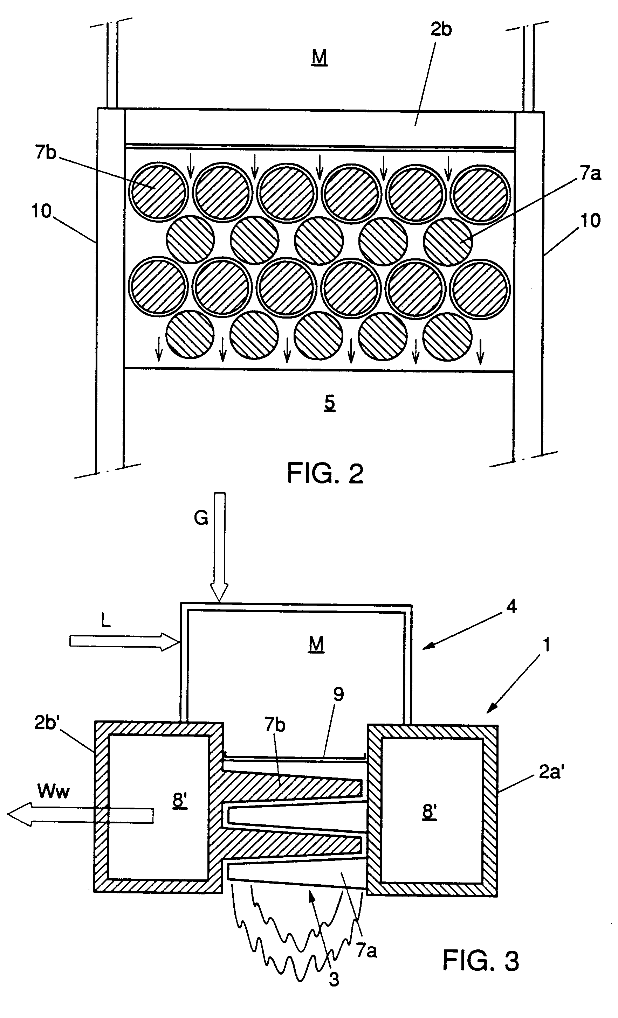

According to Figs 1 and 2, a central-heating boiler element 1 is designed with a heat exchanger 2 which is composed of two parts 2a and 2b which are arranged on opposite sides of the axis A-A of the element 1.

The parts 2a and 2b of the heat exchanger bound the burner opening 3 of a burner block 4 and a combustion chamber 5. The burner block 4 further comprises a mixing chamber M for gas (G) and air (L).

The heat exchanger parts 2a and 2b comprise heating-surface enlarging fingers 6a and 6b, respectively, as well as projections 7a and 7b, respectively, extending into the burner opening 3. Indicated further in the heat exchanger 2 is a water duct 8 extending from the lower end where cooled flue gases (R) leave the boiler 1 up to the top where the water duct parts 2a' and 2b' are disposed adjacent to the burner opening 3.

The projections 7a, 7b define a narrow labyrinth passage for combustible mixture in the burner opening 3. At the entrance of the burner opening, there is further indicated a perforated distributor plate 9 (for instance made of RVS).

In the embodiment shown, as appears from Fig. 2, the heat exchanger 2 is designed as a rectangular box, in which the two parts 2a and 2b are joined by end walls 10.

Important is the design of the projections 7a, 7b in the burner opening 3, which are frustoconical as shown in the drawings, extend into the vicinity of the oppositely arranged heat exchanger half and extend between each other in such a manner that a labyrinth passage having a width of 2-2.5 mm is obtained, as indicated by arrows in Fig. 2. As a possible practical embodiment, the projections 7a and 7b can have a diameter course of 10-6 mm at a length of 30-50 mm.

During operation, gas G and air L are supplied to the mixing chamber M. The combustible mixture is uniformly distributed across the cross-section of the burner opening 3 by the distributor plate 11 and then flows through the narrow labyrinth passage between the projections 7a, 7b to the combustion chamber 5.

The flue gases give off heat to the projections 6a, 6b and are discharged as indicated by the arrow R. Medium to be heated, for instance central-heating water coming from radiators in a space to be heated, flows into the heat exchanger 2 at the bottom thereof, as indicated by the arrow Wk, flows through the heat exchanger in counterflow to the flue gases R and leaves the heat exchanger 2 at the top thereof as indicated by the arrow Ww.

Fig. 3 shows the burner block 4 as a separate element. As in the integrated design, the burner opening can be bounded by two separate light-metal cast parts 2a' and 2b' comprising a water duct 8' and having projections 7a and 7b extending into the burner opening 3 and defining a narrow labyrinth passage for combustible mixture formed in the mixing chamber M.

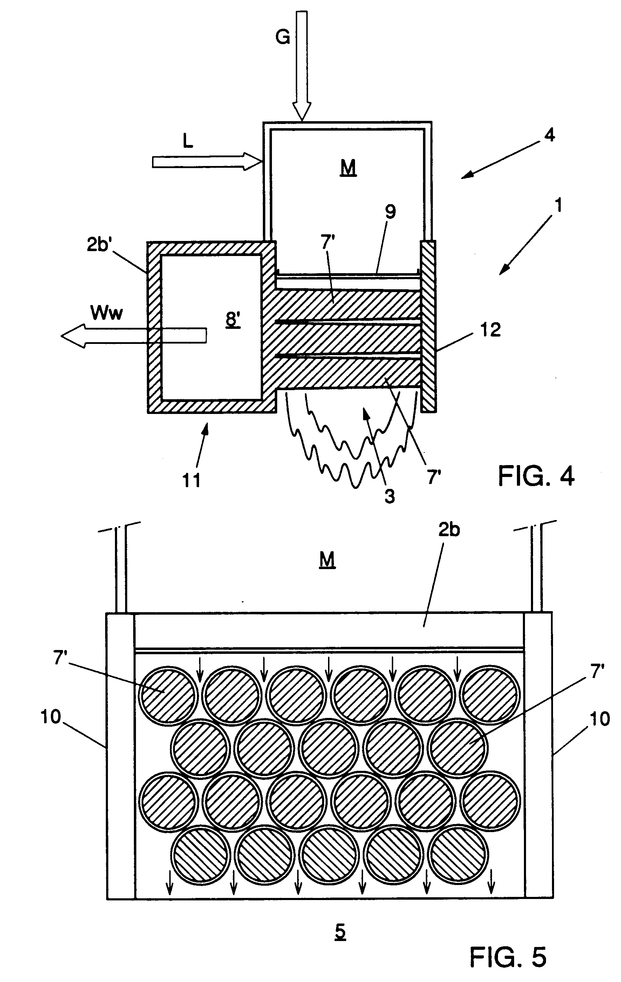

In the embodiment shown in Figs 4 and 5, in which similar parts are indicated by the same reference numerals as in the other figures, the burner comprises a casting 11 which comprises a water duct part 2b' and projections 7' extending therefrom. The projections 7' are arranged according to a staggered pattern which can be seen in Fig. 5 and have a conicity so slight, decreasing for instance from 7 to 6.7 mm at a length of 30-50 mm, that they define in the burner opening a labyrinth passage of a width of the order of 2-2.5 mm.

Mounted on the free ends of the projections 7' is a backplate 12, either attached thereto, for instance by screwing, or cast integrally with the water duct part 2b' and the projections 7'.

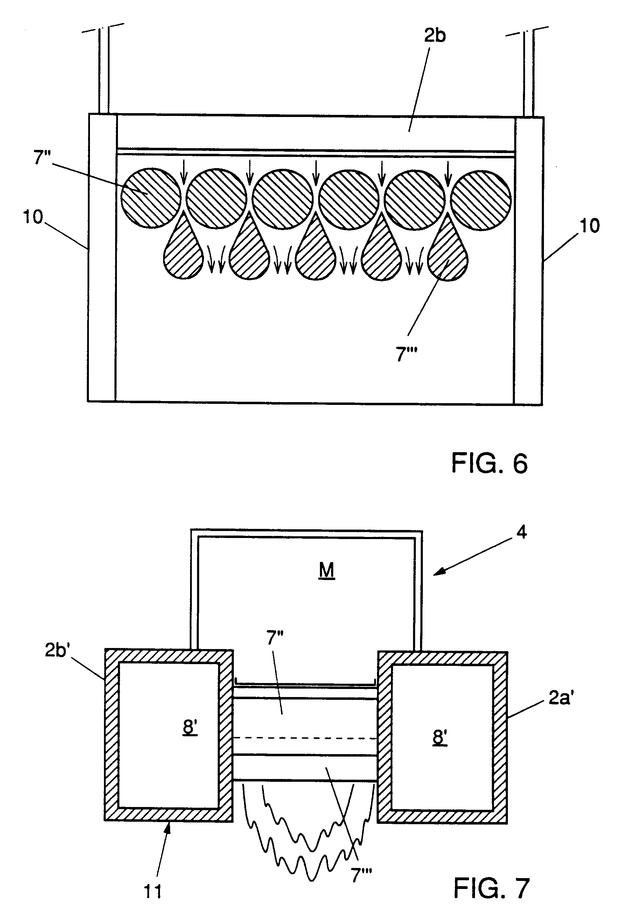

In the embodiment of Figs 6 and 7 the projection pattern consists of a series of juxtaposed projections 7'' of cylindrical cross-section, which may for instance have a diameter of 13 mm and are spaced apart at 2 mm intervals. Provided adjacent thereto is a series of projections 7''' which have a generally drop-shaped cross-section and have their narrow top ends extending between the projections 7'' of the adjacent series, such that between each drop-shaped projection 7''' and the adjacent cylindrical projection 7'' a clearance width, likewise of about 2 mm, is present. In this embodiment, the burner part with integrated water duct parts 8' and with the projections 7'' and 7''' can be cast as one whole from one side.

Both in the integrated design and in a separate burner, at full load, the flame will stabilize at a flame length of 4-5 cm at or slightly beyond the projections 7a located on the side of the burner chamber 5.

When modulating to partial load, whereby the mixture flow rate is lowered, the flame can recede to between the projections 7a and 7b; 7'. The heat which the flame gives off to the projections 7a, 7b; 7' is transferred to the water which flows through the heat exchanger 2, 2a', 2b'.

Accordingly, the temperature of the burner will at all times be limited to a maximum of 280°, allowing light metal to be used for the burner and not leading to any NOₓ production. The heat exchanger according to the invention can be manufactured both as a two-part design and as a single-part design in a simple manner from the point of view of casting technique. An additional advantage of the two-part design is that it provides the possibility of varying the width of the narrow labyrinth passage by exact dimensioning of the projections 7a, 7b, 7' as required.

## Claims

1. Heating apparatus having a burner and a light-metal cast heat exchanger (2) bounding a combustion chamber (5) and comprising water ducts (8) and heating-surface enlarging protrusions on the flue gas side, characterized in that the burner opening (3) of the burner (4) is at least partly bounded by a water duct (8') having inwardly extending protrusions (7a, 7b; 7') defining a labyrinth passage for a combustible gas/air mixture in the burner opening (3).

2. Heating apparatus according to claim 1, characterized in that the labyrinth passage is dimensioned to be so narrow that the mixture is compressed, so that the flame has a length of 4-5 cm and at full load stabilizes slightly beyond the last projections (7a) located on the side of a combustion chamber (5).

3. Heating apparatus according to claim 2, characterized in that a backplate (12) is arranged against the free ends of the projections (7'), for instance cast thereon or screwed thereto.

4. Heating apparatus according to any one of claims 1-3, characterized in that, viewed in the through-flow direction of the flue gas, the projections (7a, 7b, 7', 7'', 7''') are arranged in successive series of juxtaposed projections of such profiles and so arranged relative to the projections of an adjacent series that the desired labyrinth passage between the projections is formed.

5. Heating apparatus according to claim 4, characterized in that the burner (4) comprises a casting (11) comprising a water duct part (2b') as well as tapering projections (7') protruding from a wall of the water duct part, said projections being located so close to each other and having a conicity that is so slight that they bound a narrow labyrinth passage of substantially constant width.

6. Heating apparatus according to any one of the preceding claims, characterized in that the burner (4) is composed of two castings (2a', 2b') arranged on opposite sides of the longitudinal axis (A-A) of the combustion chamber (5), the projections (7a, 7b) extending into the burner opening (3) interlocking in such a manner that a labyrinth passage having a narrow clearance width is bounded.

7. Heating apparatus according to claim 4, characterized in that the projections (7a, 7b) in the burner opening (3) have a frustoconical configuration, each extend over substantially the entire cross-section of the burner opening (3) and have a diameter course from about 10 to about 6 mm, given a burner opening of 30-50 mm.

8. Heating apparatus according to claims 1-4, characterized in that the projections (7') in the burner opening (3) have a frustoconical configuration, each extend over the entire cross-section of the burner opening (3) and have a diameter course of about 7 to about 6.7 mm, given a burner opening of 30-50 mm.

9. Heating apparatus according to claim 4, in which the pattern of projections comprises at least two mutually adjacent series of juxtaposed projections, characterized in that one series consists of projections (7'') having a cylindrical cross-section and the next series consists of projections (7''') having a drop-shaped cross-section, the narrow ends thereof extending between the cylindrical projections.

10. Heating apparatus according to any one of the preceding claims, characterized in that the burner block (4) is integrated into a light-metal cast two-part heat-exchanger (2) comprising water ducts (8) and heating-surface enlarging projections (6a, 6b; 7a, 7b) on the flue gas side, the burner opening (3) being bounded by a part (2a', 2b') of the heat exchanger (2).

11. Heating apparatus according to claim 10, characterized in that the heating apparatus has a rectangular box configuration, the parts (2a, 2b) of the heat exchanger being connected to each other by end walls (10).

12. Heating apparatus according to any one of the preceding claims, characterized in that at the entrance of the burner opening (3) a mixture-distributing element in the form of a perforated plate (9) is arranged.

## Patentansprüche

1. Heizvorrichtung mit einem Brenner und einem aus Leichtmetall gegossenen Wärmetauscher (2), der eine Brennkammer (5) begrenzt und Wasserführungen (8) und rauchgasseitige, die Heizfläche erweiternde Vorsprünge aufweist, dadurch gekennzeichnet, daß die Brenneröffnung (3) des Brenners (4) wenigstens teilweise durch eine Wasserführung (8') begrenzt ist, deren sich einwärts erstreckende Vorsprünge (7a, 7b; 7') einen Labyrinthdurchgang für ein brennbares Gas/Luftgemisch in der Brenneröffnung (3) definieren.

2. Heizvorrichtung nach Anspruch 1, dadurch gekennzeichnet, daß der Labyrinthdurchgang so eng bemessen ist, daß das Gemisch verdichtet wird, wodurch die Flamme eine Länge von 4-5 cm aufweist und sich bei Vollast kurz hinter den letzten, an der Seite einer Brennkammer (5) liegenden Vorsprüngen (7a) stabilisiert.

3. Heizvorrichtung nach Anspruch 2, dadurch gekennzeichnet, daß gegen die freien Enden der Vorsprünge (7'), z.B. durch Angießen oder Anschrauben, eine Rückplatte (12) angeordnet ist.

4. Heizvorrichtung nach einem der Ansprüche 1-3, dadurch gekennzeichnet, daß, in der Durchströmungsrichtung des Rauchgases gesehen, die Vorsprünge (7a, 7b, 7', 7'', 7''') in aufeinanderfolgenden Reihen von nebeneinander liegenden Vorsprüngen mit solchen Profilierungen und in solcher Anordnung relativ zu den Vorsprüngen einer anschließenden Reihe angeordnet sind, daß der gewünschte Labyrinthdurchgang zwischen den Vorsprüngen gebildet ist.

5. Heizvorrichtung nach Anspruch 4, dadurch gekennzeichnet, daß der Brenner (4) mit einem Gußstück (11) versehen ist, das einen Wasserführungsteil (2b') sowie aus einer Wand des Wasserführungsteiles herausragende, sich verjüngende Vorsprünge (7') aufweist, welche Vorsprünge so dicht beieinander liegen und eine derart geringe Konizität aufweisen, daß sie einen engen Labyrinthdurchgang mit im wesentlichen konstanter Breite begrenzen.

6. Heizvorrichtung nach einem der vorhergehenden Ansprüche, dadurch gekennzeichnet, daß der Brenner (4) aus zwei, an gegenüberliegenden Seiten der Längsachse (A-A) der Brennkammer (5) angeordneten Gußstücken (2a', 2b') zusammengesetzt ist, wobei die sich in die Brenneröffnung (3) erstreckenden Vorsprünge (7a, 7b) derart ineinander eingreifen, daß ein Labyrinthdurchgang mit enger Schlitzbreite begrenzt ist.

7. Heizvorrichtung nach Anspruch 4, dadurch gekennzeichnet, daß die Vorsprünge (7a, 7b) in der Brenneröffnung (3) kegelstumpfförmig gestaltet sind, sich je über im wesentlichen den ganzen Querschnitt der Brenneröffnung (3) erstrecken und bei einer Brenneröffnung von 30 - 50 mm einen Durchmesserverlauf von etwa 10 bis etwa 6 mm aufweisen.

8. Heizvorrichtung nach Anspruch 1 bis 4, dadurch gekennzeichnet, daß die Vorsprünge (7') in der Brenneröffnung (3) kegelstumpfförmig gestaltet sind, sich je über den ganzen Querschnitt der Brenneröffnung (3) erstrecken und bei einer Brenneröffnung von 30 - 50 mm einen Durchmesserverlauf von etwa 7 bis etwa 6,7 mm aufweisen.

9. Heizvorrichtung nach Anspruch 4, wobei das Muster der Vorsprünge mindestens zwei aneinander anschließende Reihen von nebeneinander liegenden Vorsprüngen aufweist, dadurch gekennzeichnet, daß die eine Reihe aus Vorsprüngen (7'') mit zylindrischem Querschnitt und die nächste Reihe aus Vorsprüngen (7''') mit tropfenförmigem Querschnitt besteht, deren enge Seiten sich zwischen die zylindrischen Vorsprünge erstrecken.

10. Heizvorrichtung nach einem der vorhergehenden Ansprüche, dadurch gekennzeichnet, daß der Brennerblock (4) in einem aus Leichtmetall gegossenen, zweiteiligen Wärmetauscher (2) integriert ist, der Wasserführungen (8) und rauchgasseitige, die Heizfläche erweiternde Vorsprünge (6a, 6b; 7a, 7b) aufweist, wobei die Brenneröffnung (3) durch einen Teil (2a', 2b') des Wärmetauschers (2) begrenzt ist.

11. Heizvorrichtung nach Anspruch 10, dadurch gekennzeichnet, daß die Heizvorrichtung eine rechteckige Kastenform aufweist, wobei die Teile (2a, 2b) des Wärmetauschers durch Endwände (10) miteinander verbunden sind.

12. Heizvorrichtung nach einem der vorhergehenden Ansprüche, dadurch gekennzeichnet, daß am Eingang der Brenneröffnung (3) ein Gemischverteilelement in Form einer perforierten Platte (9) angeordnet ist.

## Revendications

1. Appareil de chauffage comportant un brûleur et un échangeur de chaleur (2) moulé en métal léger délimitant une chambre de combustion (5) et comprenant des conduites d'eau (8) et des saillies agrandissant la surface de chauffage sur le côté des gaz de combustion, caractérisé en ce que l'ouverture (3) du brûleur (4) est au moins partiellement délimitée par une conduite d'eau (8') présentant des saillies s'étendant vers l'intérieur (7a, 7b; 7') définissant un passage en labyrinthe pour un mélange gaz combustible/air dans l'ouverture (3) du brûleur.

2. Appareil de chauffage selon la revendication 1, caractérisé en ce que le passage en labyrinthe est dimensionné de manière qu'il soit suffisamment étroit pour que le mélange soit comprimé, de manière que la flamme présente une longueur de 4-5 cm et, sous pleine charge se stabilise légèrement au delà des dernières saillies (7a) situées sur le côté d'une chambre de combustion (5).

3. Appareil de chauffage selon la revendication 2, caractérisé en ce qu'une plaque postérieure (12) est disposée contre les extrémités libres des saillies (7'), par exemple coulée sur celles-ci ou vissée à celles-ci.

4. Appareil de chauffage selon l'une quelconque des revendications 1-3, caractérisé en ce que, observé dans la direction des gaz de combustion, des saillies (7a, 7b, 7', 7'', 7''') sont disposées en séries successives de saillies juxtaposées dont le profil et la disposition, par rapport aux saillies d'une série adjacente, sont tels que soit formé le passage désiré en labyrinthe entre les saillies.

5. Appareil de chauffage selon la revendication 4 caractérisé en ce que le brûleur (4) comprend une pièce moulée (11) comportant une partie de conduite d'eau (2b') ainsi que des parties chanfreinées (7'), faisant saillie à partir d'une paroi de la partie de conduite d'eau, lesdites parties en saillie étant positionnées si proches les unes des autres et ayant une conicité qui est si faible qu'elles délimitent un passage en labyrinthe étroit de largeur sensiblement constante.

6. Appareil de chauffage selon l'une quelconque des revendications précédentes, caractérisé en ce que le brûleur (4) est constitué de deux pièces moulées (2a', 2b') disposées sur deux côtés opposés de l'axe longitudinal (A-A) de la chambre de combustion (5), les parties en saillie (7a, 7b), s'étendant dans l'ouverture (3) du brûleur, se verrouillant de manière à délimiter un passage en labyrinthe ayant une faible largeur libre.

7. Appareil de chauffage selon la revendication 4, caractérisé en ce que les parties en saillie (7a, 7b) dans l'ouverture (3) du brûleur ont une configuration tronconique, chacune s'étendant sur sensiblement toute la section droite de l'ouverture (3) du brûleur et comportant un diamètre de l'ordre de 10 à environ 6 mm, donnant une ouverture de brûleur de 30 à 50 mm.

8. Appareil de chauffage selon les revendications 1-4 caractérisé en ce que les parties en saillie (7') dans l'ouverture (3) du brûleur ont une configuration tronconique, chacune s'étendant sur toute la section droite de l'ouverture (3) du brûleur et présentant un diamètre de l'ordre de 7 à 6,7 mm environ, donnant une ouverture de brûleur de 30-50 mm.

9. Appareil de chauffage selon la revendication 4, dans lequel la configuration de saillies comprend au moins deux séries mutuellement adjacentes de saillies juxtaposées, caractérisé en ce qu'une série comprend des saillies (7'') ayant une section droite cylindrique et la série suivante comprenant des saillies (7''') ayant une section droite en forme de goutte, leurs extrémités ouvertes s'étendant entre les saillies cylindriques.

10. Appareil de chauffage selon l'une quelconque des revendications précédentes caractérisé en ce que le bloc (4) du brûleur est intégré dans un échangeur de chaleur (2) en deux parties, moulé en métal léger comprenant des conduites d'eau (8) et des saillies agrandissant la surface de chauffage (6a, 6b; 7a, 7b) du côté des gaz de combustion, l'ouverture (3) du brûleur étant délimitée par une partie (2a', 2b') de l'échangeur de chaleur (2).

11. Appareil de chauffage selon la revendication 10, caractérisé en ce que l'appareil de chauffage est en forme de boîte rectangulaire, les parties (2a, 2b) de l'changeur de chaleur étant reliées les unes aux autres par des parois d'extrémité (10).

12. Appareil de chauffage selon l'une quelconque des revendications précédentes caractérisé en ce qu'on prévoit un élément de distribution du mélange ayant la forme d'une plaque perforée, à l'entrée de l'ouverture (3) du brûleur.
